# EUROPÄISCHE PATENTANMELDUNG

(11) **EP 1 919 200 A2**
(43) Veröffentlichungstag der Anmeldung: **07.05.2008**
(21) Anmeldenummer: 07019104.4
(22) Anmeldetag: 28.09.2007
(51) Int. Cl.: H04N 5/335

(54) **Verfahren und Vorrichtung zur automatischen Erkennung der relativen Bewegungsrichtung einer Mehrzeilenkamera zum Objekt**

(30) Priorität: 03.11.2006 DE 102006052440; 08.01.2007 DE 102007001760; 30.03.2007 DE 102007015320
(71) Anmelder: Basler AG, 22926 Ahrensburg (DE)
(72) Erfinder: Kunze, Jörg, 22926 Ahrensburg (DE)
(74) Vertreter: Hansmann, Dierk

(57) **Zusammenfassung**

Bei einem Verfahren zur automatischen Erkennung der Bewegungsrichtung einer Mehrzeilenkamera, insbesondere einer zwischenzeilenkamera, aus den Bilddaten wird jede Bildzeile je einmal durch jede der Sensorzeilen abgetastet und die aktuellen Bildinhalte der einzelnen Bildzeilen werden mit einem zeitlich versetzten Signal einer jeweils anderen Bildzeile kreuzweise verglichen. Der zeitliche Versatz entspricht dabei insbesondere dem um ein Triggersignal verzögerten Signal der jeweils anderen Bildzeile. Das Ausgangssignal kann durch Einbeziehung des Triggersignals und unter der Verwendung eines Zustandsschätzers hinsichtlich seiner Stabilität optimiert werden.

## Beschreibung

Die Erfindung betrifft ein Verfahren zur automatischen Erkennung der relativen Bewegungsrichtung einer Mehrzeilenkamera, insbesondere einer Zweizeilenkamera, zum Objekt, aus den Bilddaten.

Während bei einer Matrixkamera der Sensor aus einer Fläche von lichtempfindlichen Pixeln besteht, umfaßt der Sensor einer Zeilenkamera oft nur eine Zeile solcher Pixel; eine Zweizeilenkamera weist zwei Zeilen lichtempfindlicher Pixel auf. Das vollständige, von einer Zeilenkamera oder einer Zweizeilenkamera aufgenommene Bild eines abzubildenden Objektes entsteht erst durch die Bewegung dieses Objektes relativ zur Kamera bzw. durch eine in der Regel orthogonale Bewegung der Kamera relativ zum Objekt.

Zeilenkameras werden häufig zur Überwachung industrieller Fertigungsprozesse eingesetzt. In vielen Fällen wird dabei das Objekt mittels eines Fließbandes unter einer fest installierten Kamera hindurch bewegt.

Bei den Objekten auf dem Fließband handelt es sich dann um Erzeugnisse, von denen mittels der Kamera Bilder erzeugt werden, die in einer angeschlossenen digitalen Bildverarbeitung automatisiert analysiert werden. Aufgrund dieser Analyse können schadhafte Erzeugnisse oder aber Erzeugnisse, die nicht den geforderten Spezifikationen entsprechen, aus dem Fertigungsprozeß aussortiert werden.

Um das aufgenommene Bild einer Zeilenkamera richtig interpretieren zu können, ist die Kenntnis der relativen Bewegungsrichtung von Kamera und Objekt erforderlich. Dies gilt insbesondere bei einer Verwendung von Zeilenkameras in sogenannten Machine-Vision-Anlangen. Dabei ist bereits eine Zeilenkamera bekannt, die genau eine Zeile lichtempfindlicher Pixel aufweist und die für einen bidirektionalen Betrieb optimiert ist. Ein gravierender Nachteil einer solchen Einzeilenkamera besteht jedoch darin, daß die relative Bewegungsrichtung nicht aus den gewonnenen Bilddaten allein ermittelt werden kann. Vielmehr ist in jedem Fall entweder ein zusätzlicher Sensor erforderlich oder ein Eingriff durch den Anwender, um eine eventuelle Änderung der relativen Bewegungsrichtung in die Bildverarbeitung einfließen zu lassen. Ein weiterer Nachteil von Einzeilenkameras besteht darin, daß keine redundanten Bilddaten von demselben Zeitpunkt zur Verfügung stehen. Zwar können zeitlich versetzt nacheinander Bildpunkte aufgenommen werden, es können aber keine Bilddaten verglichen werden, die zeitgleich von räumlich unterschiedlichen Teilen des Objektes aufgenommen werden.

Bekannt ist in diesem Zusammenhang weiterhin der Begriff des Optischen Flusses (englisch: Optical Flow), mit dem in optisch-technischen Methoden ein Vektorfeld bezeichnet wird, das die zweidimensionale Bewegungsrichtung und Geschwindigkeit für jeden Bildpunkt bzw. für jedes Pixel einer Bildsequenz angibt.

Der Erfindung liegt die Aufgabe zugrunde, ein Verfahren bereitzustellen, das eine automatische Erkennung der relativen Bewegungsrichtung zwischen einer Mehrzeilenkamera, insbesondere einer Zweizeilenkamera, und einem abgebildeten Objekt allein aus den aufgenommenen Bilddaten ermöglicht. Weitere Aufgabe der Erfindung ist es, eine Vorrichtung zur Durchführung eines solchen Verfahrens bereitzustellen.

Die Aufgabe zur Durchführung des Verfahrens wird dadurch gelöst, daß die aktuellen Bildinhalte der Bildzeilen mit einem zeitlich versetzten Signal einer jeweils anderen Bildzeile kreuzweise verglichen werden.

Weiterhin wird vorgeschlagen, daß jede Bildzeile je einmal durch jede der Sensorzeilen abgetastet wird.

Der zeitliche Versatz wird dabei dadurch erzielt, daß der aktuelle Bildinhalt jeder der Einzelzeilen mit dem jeweils um mindestens ein Bildzeilen-Triggersignal verzögertes Signal einer jeweils anderen Bildzeile verglichen wird.

Weitere vorteilhafte Verfahrensschritte werden dadurch ermöglicht, daß das Ausgangssignal durch die Einbeziehung des Triggersignals und/oder der Verwendung eines Zustandsschätzers erzielt wird.

Die Lösung der Aufgabe für eine Vorrichtung wird dadurch gelöst, daß das Ausgangssignal durch die Einbeziehung des Triggersignals und/oder der Verwendung eines Zustandsschätzers erzielt wird.

Weitere vorteilhafte Ausgestaltungen der Vorrichtung sind durch Merkmale der Unteransprüche 5 bis 8 gekennzeichnet.

Der Vorteil der Erfindung besteht darin, daß bei der Verwendung des erfindungsgemäßen Verfahrens eine relative Richtungsänderung unmittelbar anhand der Bilddaten der Zweizeilenkamera erkannt wird. Innerhalb der Grenzen des verwendeten Triggersignals kann zudem nicht nur die Qualität der Richtungsänderung bestimmt werden, sondern auch dessen Signifikanz. Damit ermöglicht es das Verfahren gemäß der Erfindung, eine Zweizeilenkamera in Kombination mit einer digitalen Bildverarbeitung zu betreiben, ohne daß ein zusätzlicher Sensor für eine eventuell eintretenden Richtungsänderung erforderlich wäre. Dabei wird erfindungsgemäß eine Doppelzeilen-Kamera verwendet, die so betrieben wird, daß jede Bildzeile je einmal durch jede der beiden Sensorzeilen und somit mehrfach abgetastet wird. Durch den in dem erfindungsgemäßen Verfahren vorgesehenen kreuzweisen Vergleich der aktuellen Bildinhalte einer Einzelzeile mit dem jeweils um einen Bildzeilentrigger verzögerten Signal einer anderen Zeile wird die Richtung der besseren Übereinstimmung ermittelt. Die in vorteilhafter Weiterbildung des Verfahrens gemäß der Erfindung vorgesehene Einbeziehung des Triggersignals und die dabei mögliche Verwendung einer Zustandsschätzeinheit, erlaubt es zudem, ein besonders robustes Ausgangssignal zu erzielen.

Das erfindungsgemäße Verfahren, das sowohl für Zweizeilenkameras auch für Zeilenkameras mit mehr als zwei Zeilen verwendbar ist, ermöglicht nicht nur erstmals eine automatische Richtungserkennung bei solchen Mehrzeilenkameras ohne die Erfordernis zusätzlicher Komponenten, sondern es arbeitet zugleich
auch besonders schnell, da die Verarbeitung in Echtzeit und nicht nachgelagert erfolgt. Zudem ist es preiswert und sicher in der Durchführung. Ferner ist es bei einer Verwendung des Verfahrens gemäß der Erfindung möglich, an die Bildinhalte eine Richtungsinformation, einen sogenannten Directions-Stamp, anzuhängen.

Nachfolgend soll die Erfindung anhand von in der Zeichnung dargestellten Ausführungsbeispielen näher erläutert werden. Es zeigen:
- Fig. 1: eine prinzipielle Darstellung des Verfahrens eines mit einer Zweizeilenkamera erfaßten Objektes,
- Fig.: 2 eine schematische Darstellung einer ersten Vorrichtung zur automatischen Erkennung der Bewegungsrichtung und
- Fig. 3: eine schematische Darstellung einer alternativen Vorrichtung zur automatischen Erkennung der Bewegungsrichtung.

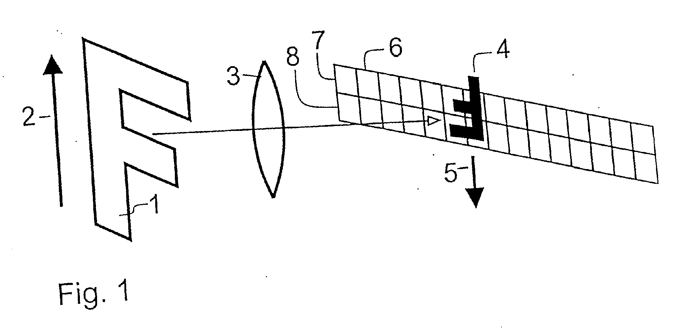

Bei der in Fig. 1 dargestellten Bilderfassung und - verarbeitung mit Hilfe einer Doppelzeilen-Kamera wird ein Objekt 1 relativ zu einem Bildsensor 6 in Richtung des Pfeiles 2 bewegt und sein durch eine Abbildungslinse 3 erzeugtes bewegtes Bild 4 wird in Richtung des Pfeiles 5 durch zwei Sensorzeilen 7 und 8 der in der Figur nicht explizit dargestellten Kamera abgetastet. Durch eine Speicherung des Signals der erstabtastenden Sensorzeile 7 in einem verzögernden Speicherelement einer nachgeschalteten Verarbeitungseinheit werden die beiden Einzelzeilen-Bildsensorsignale, die der gleichen Bildzeile zugehörig sind, wie nachfolgend noch näher erläutert mit einem geeigneten mathematischen Verarbeitungsmodul überlagernd weiterverarbeitet, beispielsweise durch eine Addition oder Mittelwertbildung. Dadurch wird ein Ausgangssignal erzeugt, das einen höheren Dynamikbereich bzw. ein besseres Signal-RauschVerhältnis als jedes der Einzelzeilensignale aufweist. Hierfür ist jedoch die Kenntnis der Bewegungsrichtung 5 des Bildes erforderlich.

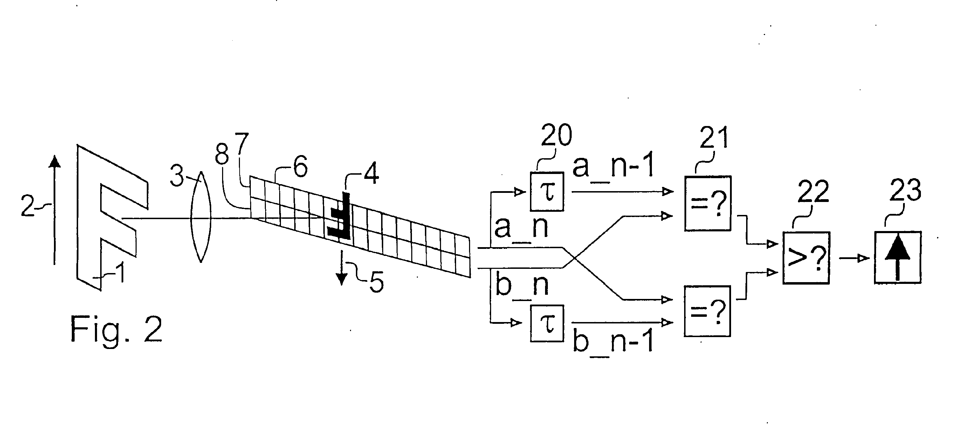

Gemäß des in Fig. 2 dargestellten Verfahrens wird die Bewegungsrichtung wie folgt ermittelt: Die beiden Bildsignalvektoren der Sensorzeilen 7 und 8, a_n und b_n, werden jeweils mit einem verzögernde Speicherelement 20 um eine Zeile verzögert, wodurch jeweils das verzögerte Signal a_n-1 bzw. b_n-1 mit dem aktuellen Signal der gegenüberliegenden Zeile b_n bzw. a_n in je einer Vergleichseinheit 21 verglichen werden kann. Dieser Vergleich kann rein logischer Natur sein. Bei dem hier beschriebenen Ausführungsbeispiel ist vorgesehen, daß in der Vergleichseinheit 21 ein Maß für die Gleichheit mit einem geeigneten mathematischen Verfahren ermittelt wird, in diesem Fall mittels des euklidischen Abstandes der Bildwertvektoren oder mittels des Bildwertvektorabstandes gemäß einer anderen Norm. Der Vergleich kann aber auch anhand einer Korrelationssumme der beiden Bildwertvektoren erfolgen. Durch den Vergleich der beiden von der Vergleichseinheiten 21 ermittelten Gleichheitsmeßwerte in einer nachgeschalteten Vergleichsvorrichtung 22 wird schließlich die Bewegungsrichtung 23 ermittelt. Diese Erkennung der Bewegungsrichtung basiert darauf, daß durch den Bildvorschub entweder die Bildinhalte von a_n und b_n-1 oder andernfalls diejenigen von b_n und a_n-1 identisch sein müssen, je nach der Bewegungsrichtung des Objektes 1. Identische Bildinhalte aber bedeuten eine hohe Gleichheit bzw. Ähnlichkeit.

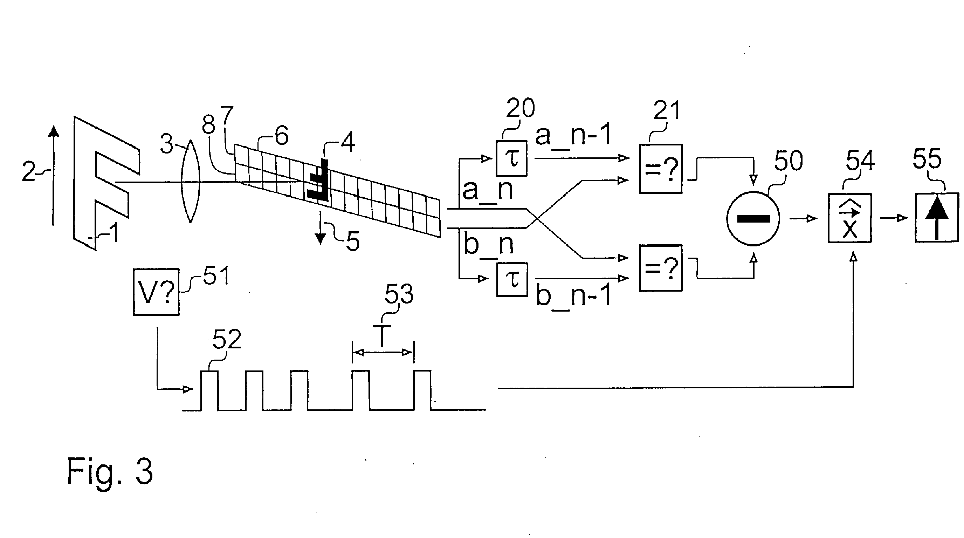

Das anhand von Fig. 2 beschriebene Verfahren führt dann zu einem robusten Ergebnis, wenn das Bild einen hinreichenden Kontrast in Richtung 5 der Relativbewegung aufweist. Um das Verfahren noch robuster zu machen, kommt gemäß der bevorzugten Ausführungsform des Verfahrens die in Fig. 3 dargestellte Anordnung zum Einsatz. Hier werden bei ansonsten gleichem Aufbau wie vorangehend beschrieben die Gleichheitsmeßwerte der beiden Vergleichseinheiten 21 in einer weiteren Vergleichseinheit 50, die im Fall des hier beschriebenen Ausführungsbeispiels aus einem Differenzbildner besteht, so zusammengefaßt, daß eine Information über die Richtung, in dem hier gezeigten Beispiel das Vorzeichen der Differenz, und über die Signifikanz, in dem hier gezeigten Beispiel der Betrag der Differenz, vorliegt. Diese Information wird nachfolgend einer Zustandsschätzeinheit 54 zugeführt, die unter Anwendung eines geeigneten mathematischen Verfahrens, wie in diesem Fall durch eine lineare Zustandsschätzung, beispielsweise mit einem Kalman-Filter, ein stabiles Ausgangssignal 55 erzeugt.

Selbstverständlich ist es auch möglich, ein stabiles Ausgangssignal 55 der Zustandsschätzeinheit 54 unter Anwendung eines mathematischen Verfahrens anhand von Schwellwerten, nichtlinearen Zustandsschätzungen oder durch die Verwendung von Hysteresen zu erzeugen.

Weiterhin kann mit der in Fig. 3 dargestellten Anordnung auch das Signal bezüglich der Geschwindigkeit der Relativbewegung 2 des Objektes 1 ausgewertet werden, das mit einem geeigneten Meßmittel 51, im Fall des hier beschriebenen Ausführungsbeispiels einem Encoder, erfaßt und an die Kamera in Form eines Triggersignales 52 übermittelt wird. Hierbei kann entweder die Periodendauer 53 oder die Frequenz des Triggersignales ermittelt und das Ergebnis der Zustandsschätzeinheit 54 zugeführt werden. Da die Relativbewegung des Objektes 1 im allgemeinen mechanischer Natur ist, ist die Umkehr der Richtung 2 mit einer Beschleunigung und einem Nulldurchgang der Geschwindigkeit verbunden, welche durch eine hohe Periodendauer 53 bzw. durch eine geringe Triggerpulsfrequenz gekennzeichnet ist. Durch die Übermittlung des Triggersignales kann die Zustandsschätzeinheit 54 den Zeitpunkt einer möglichen Richtungsumkehr besser erkennen, z.B. durch einen Schwellwertvergleich, und damit ein sehr verläßliches Ausgangssignal 55 liefern.

## Patentansprüche

1. Verfahren zur automatischen Erkennung der relativen Bewegungsrichtung einer Mehrzeilenkamera, insbesondere einer Zweizeilenkamera, zum Objekt, aus den Bilddaten, **dadurch gekennzeichnet, daß** die aktuellen Bildinhalte zweier Bildzeilen mit einem zeitlich versetzten Signal einer jeweils anderen Bildzeile kreuzweise verglichen werden.

2. Verfahren nach Anspruch 1, **dadurch gekennzeichnet, daß** jede Bildzeile je einmal durch jede der Sensorzeilen abgetastet wird.

3. Verfahren gemäß Anspruch 1 oder 2, **dadurch gekennzeichnet, daß** der aktuelle Bildinhalt jeder der Einzelzeilen mit dem jeweils um mindestens ein Bildzeilen-Triggersignal verzögertes Signal einer jeweils anderen Bildzeile verglichen wird.

4. Verfahren gemäß eines Anspruches 1 bis 3, **dadurch gekennzeichnet, daß** das Ausgangssignal durch die Einbeziehung des Triggersignals und/oder der Verwendung eines Zustandsschätzers erzielt wird.

5. Verfahren gemäß einem der Ansprüche 1 bis 4, **dadurch gekennzeichnet, daß** ein stabiles Ausgangssignal anhand von Schwellwerten oder durch eine Verwendung von Hysteresen zur Zustandsschätzung oder durch eine lineare oder nichtlineare Zustandsschätzung erzeugt wird.

6. Vorrichtung zur Durchführung des Verfahrens nach einem der Ansprüche 1 bis 5 unter Verwendung einer Mehrzeilenkamera, insbesondere einer Zweizeilenkamera, **gekennzeichnet durch** wenigstens je ein den Sensorzeilen (7, 8) assoziertes, verzögerndes Speicherelement (20, 60) sowie wenigstens eine diesen nachgeschaltete Verarbeitungseinheit (21, 22, 61).

7. Vorrichtung gemäß Anspruch 6, **dadurch gekennzeichnet, daß** den Vergleichseinheiten (21, 22) eine weitere Vergleichseinheit (50) und/oder eine Zustandsschätzeinheit (54) nachgeschaltet ist.

8. Vorrichtung gemäß Anspruch 7, **dadurch gekennzeichnet, daß** die weitere Vergleichseinheit (50) aus mindestens einem Differenzbildner besteht.

9. Vorrichtung gemäß Anspruch 7, **dadurch gekennzeichnet, daß** die Zustandsschätzeinheit (54) aus einem Kalman-Filter besteht.
